# EUROPÄISCHE PATENTANMELDUNG

(11) **EP 4 332 029 A1**
(43) Veröffentlichungstag der Anmeldung: **06.03.2024**
(21) Anmeldenummer: 22192908.6
(22) Anmeldetag: 30.08.2022
(51) Int. Cl.: B65G 47/244, B65G 54/02

(54) **GÜTERTRANSPORTSYSTEM, STEUEREINHEIT, BAUSATZ, SIMULATIONSPROGRAMMPRODUKT UND VERWENDUNG EINER AKTIVKOMPONENTE EINES PLANARMOTORS**

(71) Anmelder: Siemens Aktiengesellschaft, 80333 München (DE)
(72) Erfinder: Cramer, Christian, 90431 Nürnberg (DE); Kunze, Philipp, 90489 Nürnberg (DE); Streubühr, Martin, 90513 Zirndorf (DE)
(74) Vertreter: Siemens Patent Attorneys

(57) **Zusammenfassung**

Die Erfindung betrifft ein Gütertransportsystem (10), das eine Zufuhrschiene (12) und eine Abfuhrschiene (14), umfasst die jeweils als Linearmotor (25) ausgebildet sind. Diese sind zu einem linearen Bewegen eines Werkstückträgers (16) ausgebildet. Ferner ist ein Umlenkmodul (20) zwischen der Zufuhrschiene (12) und der Abfuhrschiene (14) angeordnet, das zu einem vorgebbaren Bewegen des Werkstückträgers (16) ausgebildet ist. Erfindungsgemäß ist das Umlenkmodul (20) als Aktivkomponente (22) eines Planarmotors (24) ausgebildet. Die Erfindung betrifft auch eine Steuereinheit (30) zum Betreiben eines solchen Gütertransportsystems 10 und einen Bausatz 45 zum Herstellen eines solchen Gütertransportsystems (10). Die Erfindung betrifft auch ein Simulationsprogrammprodukt (50) zum Nachstellen eines Betriebsverhaltens eines derartigen Gütertransportsystems (10).

## Beschreibung

Die Erfindung betrifft ein Gütertransportsystem und eine zugehörige Steuereinheit. Ebenso betrifft die Erfindung einen Bausatz, der zum Herstellen eines korrespondierenden Gütertransportsystems eingerichtet ist. Ferner betrifft die Erfindung ein Simulationsprogrammprodukt, das dazu eingerichtet ist, ein Betriebsverhalten eines entsprechenden Gütertransportsystems zu simulieren.

Die Internationale Anmeldung WO 2022/063848 A1 offenbart ein elektromagnetisches Transportsystem, das eine Mehrzahl an Transporteinheiten aufweist, die entlang von Transportstrecken über Antriebsspulen bewegbar sind. Die Transportstrecken können mit Langstatorlinearmotoren, Planarmotoren oder Kombinationen hiervon versehen sein.

Gütertransportsysteme werden in einer Vielzahl an Automatisierungsanlage, insbesondere Fertigungsanlagen oder Logistiksystemen, eingesetzt. Es besteht Bedarf an einer steigenden Transportkapazität, insbesondere in Form einer gesteigerten Durchsatzgeschwindigkeit des Gütertransportsystems. Gleichzeitig werden steigende Anforderungen in puncto Vielseitigkeit gestellt, um unterschiedliche Transportrouten innerhalb des Gütertransportsystems zu bedienen. Gleichzeitig wird eine erhöhte Wirtschaftlichkeit gefordert. Der Erfindung liegt die Aufgabenstellung zugrunde, eine Möglichkeit bereitzustellen, die in zumindest einem der skizzierten Aspekte eine Verbesserung bietet.

Die Aufgabenstellung wird durch ein erfindungsgemäßes Gütertransportsystem gelöst, das in einer Automatisierungsanlage, beispielsweise einer Fertigungsanlage oder einem Logistiksystem, einsetzbar ist. Das Gütertransportsystem umfasst zumindest eine Zufuhrschiene und eine Abfuhrschiene, die jeweils als Linearmotor ausgebildet sind. Auf der Zufuhrschiene ist ein Werkstückträger vorgebbar bewegbar. Die Bewegung des Werkstückträgers ist hierbei im Wesentlichen ein berührungsloses Gleiten durch elektromagnetische Felder. In einem bestimmungsgemäßen Betrieb des Gütertransportsystems ist der Werkstückträger, der dem Transport eines Transportguts dient, mit einer vorgebbaren Richtung, Geschwindigkeit und Beschleunigung linear beweglich. Analog dient die Zufuhrschiene dazu, den Werkstückträger vorgebbar linear zu bewegen. Im Sinne des erfindungsgemäßen Gütertransportsystems dient die Zufuhrschiene einem Zuführen des Werkstückträgers und die Abfuhrschiene einem Abführen des Werkstückträgers, auf dem das Transportgut transportierbar ist.

Das Gütertransportsystem weist ein Umlenkmodul auf, das zwischen der Zufuhrschiene und der Abfuhrschiene angeordnet ist. Das Umlenkmodul ist derart angeordnet, dass der Werkstückträger auf dem Weg von der Zufuhrschiene zur Abfuhrschiene das Umlenkmodul gleitend überquert. Das Umlenkmodul ist dazu ausgebildet, auf eine Bewegung des Werkstückträgers einzuwirken. Erfindungsgemäß ist das Umlenkmodul hierzu als Aktivkomponente eines Planarmotors ausgebildet. Das Umlenkmodul ist mit ansteuerbaren elektromagnetischen Komponenten, insbesondere Elektromagneten, versehen, die zu einem Einwirken auf den Werkstückträger ausgebildet sind. Infolgedessen ist der Werkstückträger entlang und quer zu einer durch die Zufuhrschiene vorgegebenen Richtung bewegbar. Die durch die Zufuhrschiene und/oder die Transportschiene vorgegebene Richtung ist dabei als Transporthauptrichtung aufzufassen.

Im Betrieb des erfindungsgemäßen Gütertransportsystems ist das Umlenkmodul als eine Weiche einsetzbar, durch die der Werkstückträger auf eine Abfuhrschiene umlenkbar ist, die im Wesentlichen beliebig ausgerichtet sein kann. Dies erlaubt es beispielsweise, den Werkstückträger mit einen reduzierten Kurvenradius umzulenken. Ebenso sind geometrisch komplexere Umlenkungen des Werkstückträgers möglich. Das erfindungsgemäße Gütertransportsystem erlaubt damit komplexe Automatisierungsanlagen kompakt auszubilden. Gleichzeitig ist durch die Verwendung von Linearmotoren als Zufuhrschiene und als Abfuhrschiene eine erhöhte Transportgeschwindigkeit erzielbar, also eine gesteigerte Durchsatzgeschwindigkeit im Gütertransportsystem. Die Verwendung aufwendiger Manipulatoren, beispielsweise von Roboterarmen, zum Umlenken von Werkstückträgern und/oder Transportgütern auf andere Gütertransportsysteme ist ebenso entbehrlich. Dadurch ist das erfindungsgemäße Gütertransportsystem kosteneffizient und auch für Transportgüter geeignet, die anfällig für Beschädigungen bei einer Handhabung durch Manipulatoren sind. Linearmotoren und Planarmotoren weisen eine reduzierte Anzahl an beweglichen Teilen auf und bieten dadurch eine erhöhte Robustheit gegen Verschleiß. Das erfindungsgemäße Gütertransportsystem weist dadurch auch eine erhöhte Zuverlässigkeit auf.

In einer Ausführungsform des beanspruchten Gütertransportsystems kann der Werkstückträger mit mindestens einer Passivkomponente eines Planarmotors versehen sein. Unter einer Passivkomponente ist hierbei ein Gegenstück zur Aktivkomponente zu verstehen, die nicht unmittelbar ansteuerbar ist und ausschließlich über passive Komponenten verfügt. Der Werkstückträger kann mit einer einzigen Passivkomponente versehen sein, wodurch dieser in einfacher Weise ansteuerbar ist. Insbesondere ist eine Erfassung einer Position und/oder Ausrichtung des Werkstücks vereinfacht. Alternativ kann der Werkstückträger mit einer Mehrzahl an Passivkomponenten versehen sein. Die Passivkomponenten können beabstandet zu einem Schwerpunkt des Werkstückträger, des Transportguts oder eines kombinierten Schwerpunkts des Werkstückträger und des Transportguts angeordnet sein. Die hieraus resultierenden gesteigerten Hebellängen erlauben ein beschleunigtes Rotieren des Werkstückträgers. Ein Geschwindigkeitsverlust, und damit ein Zeitverlust am Umlenkmodul ist hierdurch reduzierbar. Dies erlaubt es, die auf der Zufuhrschiene erzielbare Geschwindigkeit des Werkstückträgers stärker auszuschöpfen.

Darüber hinaus kann der Werkstückträger durch das Umlenkmodul um eine Drehachse vorgebbar rotierbar sein. Die Drehachse steht dabei im Wesentlichen senkrecht zur Hauptebene des Umlenkmoduls, die der Werkstückträger im bestimmungsgemäßen Betrieb überquert. Die Drehrichtung ist hierbei durch ein entsprechendes Ansteuern des Umlenkmoduls, also der Aktivkomponente, vorgebbar. Hierdurch ist der Werkstückträger unter Anpassung seiner Ausrichtung von der Zufuhrschiene an die Abfuhrschiene weiterleitbar. Insbesondere kann der Werkstückträger auf dem Umlenkmodul in eine Ausrichtung gebracht werden, die ein vereinfachtes Einfädeln auf der Abfuhrschiene ermöglicht. Dadurch sind in einer Automatisierungsanlage, in der das Gütertransportsystem eingesetzt wird, weitere Handhabungen entbehrlich oder werden zumindest vereinfacht.

In einer weiteren Ausführungsform des beanspruchten Gütertransportsystems können die Zufuhrschiene und die Abfuhrschiene bezogen auf ihre Transporthauptachsen zueinander versetzt angeordnet sein. Dementsprechend verfehlt der Werkstückträger bei geradliniger Weiterbewegung entlang der Transporthauptsachse der Zufuhrschiene die Abfuhrschiene. Infolgedessen ist das Umlenkmodul dazu ausgebildet, eine Bahn des Werkstückträgers parallel zu seiner Hauptebene zu versetzen, also beispielsweise bogenförmig oder S-förmig umzulenken. Die Zufuhrschiene und die Abfuhrschiene können zueinander eine im Wesentlichen beliebige Ausrichtung ausweisen. Das beanspruchte Gütertransportsystem ist somit an eine bestehende Automatisierungsanlage anpassbar und kann im Zuge eines Umbaus oder eines Upgrades nachgerüstet werden. Insbesondere kann die Vielseitigkeit einer bestehenden Automatisierungsanlage durch das beanspruchte Gütertransportsystem gesteigert werden.

Des Weiteren kann die Aktivkomponente des Planarmotors eine Polpaarweite aufweisen, die im Wesentlichen der Polpaarweite eines Linearmotors, also beispielsweise der Zufuhrschiene und/oder der Abfuhrschiene, entspricht. Alternativ kann die Aktivkomponente des Planarmotors eine Polpaarweite aufweisen, die im Wesentlichen einem ganzzahligen Vielfachen oder ganzzahligen Bruchteil der Polpaarweite des jeweiligen Linearmotors entspricht. Hierzu können Spulen in der Aktivkomponente des Planarmotors und im Linearmotor jeweils geeignete Polbreiten aufweisen. Die Spulen in den Linearmotoren können in Spulenreihen angeordnet sein und die Spulen in der Aktivkomponente des Planarmotors in einer Gitter- oder Array-Anordnung. Infolge der entsprechend angepassten Polpaarweiten ist der Werkstückträger auf dem Umlenkmodul und der Zufuhrschiene bzw. Abfuhrschiene gleichartig ansteuerbar, also lenkbar.

Ferner kann der Werkstückträger im beanspruchten Gütertransportsystem beabstandet zur Hauptebene des Umlenkmoduls mit mechanischen Führungselementen versehen sein. Die mechanischen Führungselemente kontaktieren die Hauptebene nicht. Die Führungselemente können beispielsweise als Rollen, Gummilippen, Federbeine oder Schienen ausgebildet sein. Alternativ oder ergänzend kann die Zufuhrschiene und/oder Abfuhrschiene mit mechanischen Führungselementen versehen sein, durch die ein Ausfädeln bzw. Einfädeln des Werkstückträgers unterstützt wird. Dadurch kann ein Umlenken des Werkstückträgers weiter unterstützt werden.

In einer weiteren Ausführungsform des beanspruchten Gütertransportsystems umfasst zumindest der Linearmotor, der als Zufuhrschiene bzw. Abfuhrschiene dient, eine Mehrzahl an parallel angeordneten Spulenreihen, die unabhängig ansteuerbar sind. Die parallele Anordnung ist hierbei auf die jeweilige Haupttransportrichtung der Zufuhrschiene bzw. Abfuhrschiene bezogen. Korrespondierend dazu können Magnetpakete am Werkstückträger im Bereich paralleler Kanten des Werkstückträgers angeordnet sein. Mittels der parallel angeordneten Spulenreihen ist so ein präziserer elektromagnetischer Eingriff zwischen dem jeweiligen Linearmotor, also seinen Aktivkomponenten, und dem Werkstückträger möglich. Dies ermöglicht eine beschleunigte Bewegung des Werkstückträgers auf der Zufuhrschiene bzw. Abfuhrschiene und eine präzisere Führung des Werkstückträgers. Ebenso ist auf den Werkstückträger beim Erreichen des Umlenkmoduls durch ein ungleiches Ansteuern der Spulenreihen ein Drehimpuls ausübbar. Hierdurch kann ein komplexes Umlenken des Werkstückträger auf dem Umlenkmodul eingeleitet und/oder unterstützt werden.

Weiter kann im beanspruchten Gütertransportsystem in einem Bereich des Umlenkmoduls ein Erfassungsmittel vorgesehen sein, das zu einem Erfassen einer Position und/oder Ausrichtung des Werkstückträgers ausgebildet ist. Das Erfassungsmittel kann zumindest ein elektrisches Erfassungsmittel sein, das zumindest eine elektrische Größe an einer Spule der Aktivkomponente des Planarmotors, also am Umlenkmodul, erfasst. Die elektrischen Erfassungsmittel können beispielsweise als Hallsensoren ausgebildet sein, die baugleich ausgebildet sein können. Derartige elektrische Erfassungsmittel können in einer Reihenanordnung oder in einer Array-Anordnung angeordnet sein. Das Erfassungsmittel kann auch ein optisches Erfassungsmittel, beispielsweise ein optischer Sensor sein, der an der Aktivkomponente des Planarmotors oder am Linearmotor angebracht ist und dazu ausgebildet ist, eine Position des Werkstückträgers zu erfassen. Auch derartige optische Sensoren können in Reihen- oder Arrayanordnung ausgebildet sein und baugleich ausgebildet sein. Weiter kann das Erfassungsmittel beispielsweise eine Kamera sein, die mit einer Bildverarbeitungseinheit gekoppelt ist. Die Kamera kann beispielsweise oberhalb des Planarmotors positioniert sein. Mittels der Bildverarbeitungseinheit kann beispielsweise ein Werkstückträger und/oder sein zugehöriges Transportgut identifiziert werden. Der Betrieb des beanspruchten Gütertransportsystems ist dadurch in einfacher Weise überwachbar und regelbar. Insbesondere können Positionen und/oder Ausrichtungen von Werkstückträgern während des Betriebs des Gütertransportsystems gespeichert werden und als Trainingsdatensatz für eine Künstliche Intelligenz, beispielsweise ein Neuronales Netz, bereitgestellt werden. Die Künstliche Intelligenz kann Teil eines Computerprogrammprodukts zum Steuern des Gütertransportsystems sein, das beispielsweise auf einer Steuereinheit ausführbar ist, die mit dem Gütertransportsystem koppelbar ist. Die Erfindung basiert unter anderem auf der überraschenden Erkenntnis, dass das beanspruchte Gütertransportsystem in besonders vorteilhafter Weise durch im Betrieb gewonnene Trainingsdatensätze weiterbildbar ist.

Darüber hinaus können im beanspruchten Gütertransportsystem am Umlenkmodul zumindest drei Abfuhrschienen angeordnet sein. Die zumindest drei Abfuhrschienen können im Wesentlichen in beliebiger Form am Umlenkmodul angeordnet sein. Das Umlenkmodul ist ohne Weiteres dazu geeignet, also komplexe Weiche oder Kreuzung für den Werkstückträger zu dienen. Demzufolge kann ein Werkstückträger, und damit auch das zugehörige Transportgut, in einfacher Weise nach dem Umlenkmodul zumindest drei separate Bearbeitungsstationen in einer Automatisierungsanlage erreichen. Insbesondere bei einem Gütertransportsystem, das eine Mehrzahl an Umlenkmodulen aufweist, kann so eine gesteigerte Anzahl an Kombinationen umgesetzt werden, welche Bearbeitungsstationen ein Werkstückträger, und damit ein Transportgut, in einem Durchlauf der Automatisierungsanlage erreichen kann. Infolgedessen ist eine im Wesentlichen parallele Herstellung unterschiedlicher Endprodukte in der Automatisierungsanlage möglich, wodurch deren Produktivität erhöht wird.

In einer weiteren Ausführungsform des beanspruchten Gütertransportsystems kann der Werkstückträger bei einem Überqueren des Umlenkmoduls vorgebbar kippbar ausgebildet sein. Die Aktivkomponente des als Umlenkmodul dienenden Planarmotors sind hierzu geeignet ansteuerbar, um entsprechende elektromagnetische Felder zu erzeugen, die den Werkstückträger kippen lassen. Unter einem Kippen ist hierbei eine Drehbewegung um eine Drehachse im Wesentlichen parallel zur Hauptebene des Umlenkmoduls zu verstehen. Hierdurch kann beispielsweise einem Umkippen des Transportguts bei erhöhten Beschleunigungen entgegengewirkt werden. Alternativ oder ergänzend kann das Transportgut zu seiner Bearbeitung geneigt werden. Die Vielseitigkeit des beanspruchten Gütertransportsystems wird so weiter gesteigert.

Ferner kann der Werkstückträger im beanspruchten Gütertransportsystem zumindest zwei Paare von Magnetpaketen aufweisen. Die Paare an Magnetpaketen sind hierbei überkreuzend angeordnet. Hierunter ist zu verstehen, dass entlang einer Umlaufrichtung des Werkstückträgers die Magnetpakete eines ersten Paars jeweils zwischen den Magnetpaketen des zweiten Paars liegen. Der Werkstückträger kann im Wesentlichen rechteckig oder quadratisch ausgebildet sein und die Magnetpakete jeweils im Bereich einer Kante des Werkstückträgers. Dadurch ist der Werkstückträger in einfacher Weise schnell und präzise translatorisch und rotatorisch beweglich.

Die eingangs dargestellte Aufgabenstellung wird gleichermaßen durch eine erfindungsgemäße Steuereinheit gelöst, die zu einem Ausgeben von Steuerbefehlen an zumindest eine Aktivkomponente eines Planarmotors ausgebildet ist. Die Steuereinheit ist zu einem vorgebbaren Bewegen eines Werkstückträgers auf der Aktivkomponente eingerichtet. Erfindungsgemäß ist die Steuereinheit dazu eingerichtet, den Werkstückträger von einer Zufuhrschiene über die Aktivkomponente gleitend zu einer Abfuhrschiene zu bewegen. Die Steuereinheit kann mit einem Gütertransportsystem nach einer der oben dargestellten Ausführungsformen koppelbar sein oder Teil eines entsprechenden Gütertransportsystems sein. Ferner kann die Steuereinheit mit einem Computerprogrammprodukt versehen sein, das auf der Steuereinheit ausführbar ist. Das Computerprogrammprodukt kann dazu eingerichtet sein, ein Gütertransportsystem nach einer der oben dargestellten Ausführungsformen zu betreiben. Das Computerprogrammprodukt bzw. die Steuereinheit können eine Künstliche Intelligenz, insbesondere ein Neuronales Netz, umfassen, das mittels eines Trainingsdatensatzes trainierbar ist. Der Trainingsdatensatz kann, wie oben dargelegt, im laufenden Betrieb des Gütertransportsystems oder eines baugleichen Gütertransportsystems gewonnen sein. Die Merkmale des beanspruchten Gütertransportsystems sind auf die erfindungsgemäße Steuereinheit übertragbar.

Gleichermaßen wird die oben skizzierte Aufgabenstellung durch einen erfindungsgemäßen Bausatz zum Herstellen eines Gütertransportsystems gelöst. Der Bausatz umfasst zumindest eine Zufuhrschiene, eine Mehrzahl an Abfuhrschienen und zumindest ein Umlenkmodul. Das Umlenkmodul ist als eine Aktivkomponente eines Planarmotors ausgebildet. Erfindungsgemäß ist der Bausatz dazu eingerichtet, ein Gütertransportsystem nach zumindest einer der oben skizzierten Ausführungsformen herzustellen. Dies umfasst zumindest eine mechanische Kompatibilität zwischen dem Umlenkmodul, der Zufuhrschiene und den Abfuhrschienen. Ebenso kann dies eine elektrische Kompatibilität zwischen diesen Komponenten umfassen, die beispielsweise über eine gemeinsame Steuereinheit betreibbar sind. Die Merkmale des beanspruchten Gütertransportsystems sind ohne Weiteres auf den erfindungsgemäßen Bausatz übertragbar.

Die zugrundeliegende Aufgabe wird ebenso durch ein erfindungsgemäßes Simulationsprogrammprodukt gelöst, das zu einem Simulieren eines Betriebsverhaltens eines Gütertransportsystems ausgebildet ist. Das Simulationsprogrammprodukt weist hierzu Befehle auf, die bei Ausführung auf einem Computer diesen dazu veranlassen, das Betriebsverhalten des Gütertransportsystems zu simulieren. Erfindungsgemäß ist das Gütertransportsystem, das zu simulieren ist, nach einer der oben dargestellten Ausführungsformen ausgebildet. Das Simulationsprogrammprodukt kann ein digitales Abbild zumindest des Umlenkmoduls und eines Werkstückträgers umfassen, der von vorgebbarer Weise über das Umlenkmodul bewegt wird.

Das Simulationsprogrammprodukt kann zur Simulation über ein Physik-Modul verfügen, in dem der Werkstückträger zumindest teilweise abgebildet ist. Insbesondere ist mit dem PhysikModul eine Ausübung elektromagnetischer Kräfte auf den Werkstückträger durch eine entsprechende Ansteuerung einer Aktivkomponente eines Planarmotors ermittelbar, die als das Umlenkmodul dient. Ferner ist mit dem Physik-Modul das kinematische Verhalten des Werkstückträgers infolge von vorliegenden Geschwindigkeiten, Drehungen, translatorischen, rotatorischen Trägheitsmomenten, Gewichtskräften und/oder Drehmomenten ermittelbar. Die Gewichtskräfte bzw. Drehmomente können durch den Werkstückträger selbst und/oder ein zugehörigen Transportgut ausgeübt werden. Alternativ oder ergänzend kann der Werkstückträger auch als Rechenmodell im Physik-Modul hinterlegt sein. Das Physikmodul ist auch dazu ausgebildet, einstellbare Betriebsbedingungen nachzustellen. Dazu gehört das Ansteuerungsverhalten der Aktivkomponente. Das Simulationsprogrammprodukt kann über eine Datenschnittstelle verfügen, über die entsprechende Daten über eine Benutzereingabe, eine Datenverbindung zu einem realen Gütertransportsystem, und/oder andere simulationsgerichtete Computerprogramme vorgebbar sind. Ebenso kann das Simulationsprogrammprodukt über eine Datenschnittstelle zu einem Ausgeben von Simulationsresultaten an einen Benutzer und/oder andere simulationsgerichtete Computerprogramme verfügen. Mittels des Simulationsprogrammprodukts ist beispielsweise eine defekte Komponente im Umlenkmodul, in der Zufuhrschiene und/oder der Abfuhrschiene identifizierbar. Ebenso kann eine mittels einer Künstlichen Intelligenz erarbeitete Steuerungsstrategie für das Gütertransportsystem mittels des Simulationsprogrammprodukts erprobt werden. Alternativ kann eine Steuerungsstrategie für das Gütertransportsystem durch eine Simulation, die von der Künstlichen Intelligenz koordiniert wird, auf dem erfindungsgemäßen Simulationsprogrammprodukt entwickelt werden. Dies kann insbesondere basierend auf sogenanntem Maschinellen Lernen erfolgen.

Das zugrundeliegende Gütertransportsystem ist mit den Ansteuerungsdaten, also den Steuerbefehlen, die an die Aktivkomponente des Umlenkmoduls, der Zufuhrschiene und/oder der Abfuhrschiene gesendet werden, und Erfassungsdaten für die Position und/oder Lage des Werkstückträgers im Wesentlichen vollständig beschreibbar. Diese Daten sind in einfacher Weise präzise durch sogenanntes Upsampling bzw. Downsampling aufeinander anpassbar. Die Erfindung basiert unter anderem auf der überraschenden Erkenntnis, dass diese Daten eine schnell ablaufende Simulation des zugrundeliegenden Gütertransportsystems erlauben. Dadurch ist eine echtzeitfähige Überwachung des Gütertransportsystems durch das Simulationsprogrammprodukt möglich, was einen zuverlässigen und sicheren Betrieb ermöglicht. Der Begriff der Echtzeitfähigkeit ist hierbei im Lichte der jeweiligen Anwendung, insbesondere der Art des Automatisierungssystems aufzufassen, in dem das Gütertransportsystem einzusetzen ist. Das Simulationsprogrammprodukt kann ferner als sogenannter Digitaler Zwilling ausgebildet sein, wie beispielsweis ein der Druckschrift US 2017/286582 A1 beschrieben. Der Offenbarungsgehalt von US 2017/286582 A1 wird durch Verweisung in die vorliegende Anmeldung miteinbezogen. Das Simulationsprogrammprodukt kann monolithisch ausgebildet sein, also vollständig auf einer Hardwareplattform ausführbar. Alternativ oder ergänzend kann das Simulationsprogrammprodukt modular ausgebildet sein und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung, eine Internetverbindung und/oder eine Mobilfunkverbindung sein. Die einzelnen Merkmale des beanspruchten Gütertransportsystems sind ohne Weiteres auf das Simulationsprogrammprodukt übertragbar.

Ferner wird die oben skizzierte Aufgabenstellung durch eine erfindungsgemäße Verwendung einer Aktivkomponente eines Planarmotors in einem Gütertransportsystem gelöst. Das Gütertransportsystem weist Linearmotoren auf, die als zumindest eine Zufuhrschiene und eine Abfuhrschiene dienen. Erfindungsgemäß wird die Aktivkomponente als Weiche oder Kreuzung für Werkstückträger zwischen der Zufuhrschiene und der Abfuhrschiene eingesetzt. Das Gütertransportsystem kann dabei gemäß einer der oben darstellten Ausführungsformen ausgebildet sein. Die Merkmale des beanspruchten Gütertransportsystems sind daher ohne Weiteres auf die Verwendung der Aktivkomponente übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Ausführungsform des beanspruchten Gütertransportsystems in einer Draufsicht;
- FIG 2: schematisch eine Ausführungsform eines Werkstückträgers.

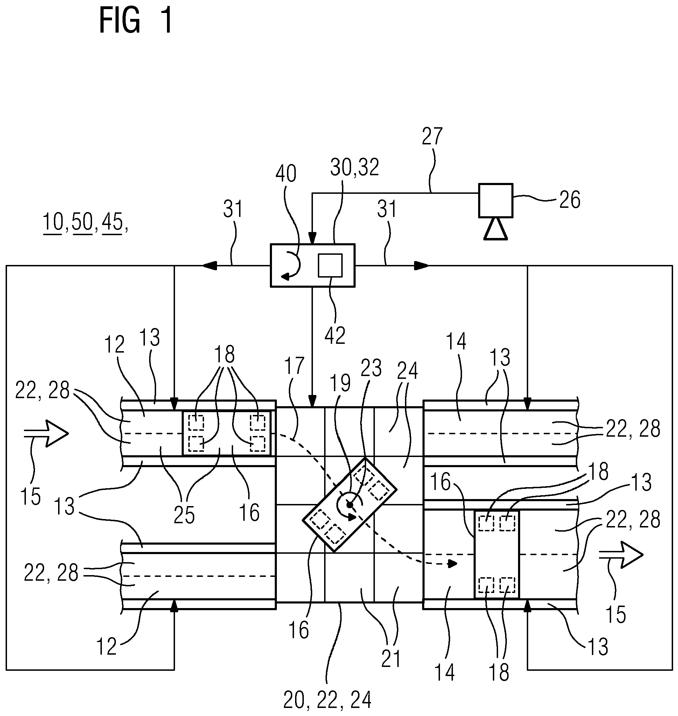

In FIG 1 ist schematisch eine erste Ausführungsform des beanspruchten Gütertransportsystems 10 in einer Draufsicht abgebildet. Das Gütertransportsystem 10 umfasst Zufuhrschienen 12, über die Werkstückträger 16 vorgebbar linear beweglich sind. Ebenso umfasst das Gütertransportsystem 10 Abfuhrschienen 14, über die die Werkstückträger 16 ebenso vorgebbar linear beweglich sind. Zwischen den Zufuhrschienen 12 und die Abfuhrschienen 14 ist ein Umlenkmodul 20 angeordnet, das ein Werkstückträger 16 überquert, um von einer der Zufuhrschienen 12 zu einer der Abfuhrschienen 14 zu gelangen. Die Zufuhrschienen 12 und die Abfuhrschienen 14 sind jeweils als Aktivkomponenten 22 eines Linearmotors 25 ausgebildet. Die Aktivkomponenten 22 sind als Spulenreihen 28 ausgebildet, die separat ansteuerbar ausgebildet sind. Der Werkstückträger 16 ist mit einer Mehrzahl an Magnetpaketen 18 versehen und bildet dadurch eine Passivkomponente. Wenn der Werkstückträger 16 sich auf der Zufuhrschiene 12 befindet, bilden die Spulenreihen 18 und der Werkstückträger 16 den Linearmotor 25 aus. Korrespondierend bilden die separat ansteuerbaren Spulenreihen 28 auf den Abfuhrschienen 14 ebenfalls Aktivkomponenten 22 für einen Linearmotor 25. Wenn der Werkstückträger 22 sich auf einer der Abfuhrschienen 14 befindet, wird dadurch ein Linearmotor 25 gebildet. Die Zufuhrschienen 12 und die Abfuhrschienen 14 sind jeweils mit mechanischen Führungselementen 13 versehen, die ein Führen von Werkstückträgern 16 unterstützen.

Das Umlenkmodul 20 ist als Aktivkomponente 22 ausgebildet, die eine Mehrzahl an Spulen 21 umfasst. Mit dem Umlenkmodul 20 wird ein Planarmotor 24 gebildet, wenn der Werkstückträger 16 sich über dem Umlenkmodul 20 befindet. Der Werkstückträger 16 bildet als Passivkomponente das funktionale Gegenstück zum als Aktivkomponente 22 ausgebildetem Umlenkmodul 20. Die Spulen 21 des Umlenkmoduls 20 sind separat ansteuerbar. Infolgedessen ist in vorgebbarer Weise auf die Magnetpakete 18 am Werkstückträger 16 einwirkbar. Der Werkstückträger 16, der die Zufuhrschiene 12 verlässt, wird durch das Umlenkmodul 20 derart angesteuert, dass er im Wesentlichen quer zur Haupttransportrichtung 15 bewegt wird. Ebenso wird durch das Umlenkmodul 20 dem Werkstückträger 16 eine Drehung 19 um eine Drehachse 23 eingeprägt. Die Drehachse 23 steht im Wesentlichen senkrecht zu einer Hauptebene des Umlenkmoduls 20, also senkrecht zur Zeichenebene von FIG 1. Der Werkstückträger 16 wird durch das Umlenkmodul 20 mit einer veränderten Ausrichtung in die in FIG 1 unten skizzierte Abfuhrschiene 14 eingefädelt. Der Werkstückträger 16 folgt hierbei einer im Wesentlichen S-förmigen Bahnlinie 17. Bei Erreichen der in FIG 1 unten dargestellten Zufuhrschiene 14 wird der Werkstückträger 16 im Wesentlichen entlang dessen Haupttransportrichtung 15 bewegt. Das Umlenkmodul 20 dient im Gütertransportsystem 10 als Weiche oder als Kreuzung für den Werkstückträger 16.

Das Gütertransportsystem 10 umfasst auch eine Steuereinheit 30, die mit den Zufuhrschienen 12, den Abfuhrschienen 14 und dem Umlenkmodul 20 verbunden. Die Spulenreihe 28 und die Spulen 21 der Zufuhrschienen 12, der Abfuhrschienen 14 bzw. des Umlenkmoduls 20 sind separat über Steuerbefehle 31 von der Steuereinheit 30 ansteuerbar. Dadurch ist der Werkstückträger 16 im Wesentlichen in beliebiger Richtung auf dem Umlenkmodul 20 vorgebbar beweglich. Dazu ist die Steuereinheit 30 mit einem Computerprogrammprodukt 40 ausgestattet, durch das die Steuerbefehle 31 vorgebbar sind. Die Steuereinheit 30 ist auch mit einem Erfassungsmittel 26 gekoppelt, das im Bereich des Umlenkmoduls 20 angeordnet ist. Das Erfassungsmittel 26 ist als Kamera ausgebildet, durch das eine Position und eine Ausrichtung des Werkstückträgers 16 erfassbar ist. Über das Erfassungsmittel 26 erfasste Positionsdaten 27 sind zu einer weiteren Auswertung an die Steuereinheit 40 weiterleitbar. Das Computerprogrammprodukt 40 kann mit dem Erfassungsmittel 26 ein Regelsystem bilden und/oder den Betrieb des Gütertransportsystems 10 überwachen. Die Positionsdaten 27 können neben Positionen des Werkstückträgers 16 auch dessen Ausrichtungen umfassen. Das Computerprogrammprodukt 40 ist mit einer Künstlichen Intelligenz 42 ausgestattet, die als Neuronales Netz ausgebildet ist. Die Positionsdaten 27 werden zusammen mit den zugehörigen Steuerbefehlen 31 als Trainingsdatensätze bereitgestellt. Anhand dieser ist die Künstliche Intelligenz 42 weitertrainierbar. Basierend auf einer derart weitertrainierten Künstlichen Intelligenz 42 können neue Steuerungsstrategien für das Gütertransportsystem 10 entwickelt werden. Ferner ist das Gütertransportsystem 10 nach FIG 1 in einem nicht näher gezeigten Simulationsprogrammprodukt 60 abgebildet, das als Digitaler Zwilling ausgebildet ist. Das Simulationsprogrammprodukt 60 ist dazu eingerichtet, den Betrieb des Gütertransportsystems 10 zu überwachen. Alternativ oder ergänzend ist das Simulationsprogrammprodukt 60 dazu geeignet, das Betriebsverhalten des Gütertransportsystems 10 zu simulieren. Im Zusammenspiel mit der Künstlichen Intelligenz 42 sind so per Simulation Steuerungsstrategien für das Gütertransportsystem 10 selbsttätig entwickelbar. Das Gütertransportsystem 10 ist aus einem Bausatz 45 hergestellt, der das Umlenkmodul 20, die Zufuhrschienen 12 und die Abfuhrschienen 14 umfasst.

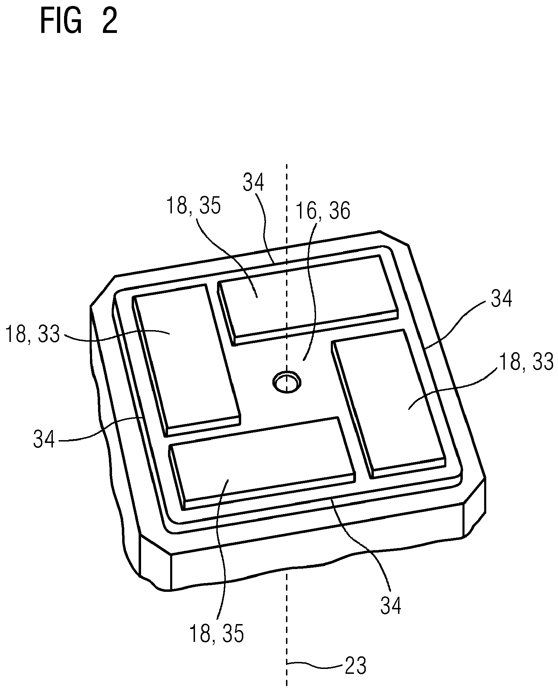

Eine Ausführungsform eines Werkstückträgers 16 ist in FIG 2 schematisch in einer Untersicht dargestellt. Der Werkstückträger 16 ist im Wesentlichen quadratisch ausgebildet und ist an seiner Unterseite mit einer Mehrzahl an Magnetpaketen 18 versehen. Die Anordnung der Magnetpakete 18 stellen ein Passivkomponente 26 für einen Linearmotor 25 und/oder einem Planarmotor 24, wie beispielsweise in FIG 1 gezeigt, dar. Am Werkstückträger 16 sind im Bereich dessen Kanten 36 die Magnetpakete 18 positioniert, die im Wesentlichen rechteckig ausgebildet sind. Magnetpakete 18 an gegenüberliegenden Kanten 34 bilden ein erstes Magnetpaketpaar 33 und ein zweites Magnetpaketpaar 35. Das erste und zweite Magnetpaketpaar 33, 35 sind dementsprechend überkreuzend angeordnet. Die Anordnung der Magnetpaketpaare 33, 35 erlaubt es, den Werkstückträger 16 vorgebbar um eine Drehachse 23 zu rotieren.

## Patentansprüche

1. Gütertransportsystem (10), umfassend eine Zufuhrschiene (12) und eine Abfuhrschiene (14), die jeweils als Linearmotor (25) ausgebildet sind und zu einem linearen Bewegen eines Werkstückträgers (16) ausgebildet sind, wobei ein Umlenkmodul (20) zwischen der Zufuhrschiene (12) und der Abfuhrschiene (14) angeordnet ist und zu einem vorgebbaren Bewegen des Werkstückträgers (16) ausgebildet ist, **dadurch gekennzeichnet, dass** das Umlenkmodul (20) als Aktivkomponente (22) eines Planarmotors (24) ausgebildet ist.

2. Gütertransportsystem (10) nach Anspruch 1, **dadurch gekennzeichnet, dass** der Werkstückträger (16) mit mindestens einer Passivkomponente (36) eines Planarmotors (24) versehen ist.

3. Gütertransportsystem (10) nach Anspruch 1 oder 2, **dadurch gekennzeichnet, dass** der Werkstückträger (16) durch das Umlenkmodul (20) um eine Drehachse (23) senkrecht zu einer Hauptebene des Umlenkmoduls (20) vorgebbar rotierbar ist.

4. Gütertransportsystem (10) nach einem der Ansprüche 1 bis 3, **dadurch gekennzeichnet, dass** die Zufuhrschiene (14) und die Abfuhrschiene (14) bezogen auf ihre Transporthauptachsen (15) zueinander versetzt angeordnet sind.
Frage: Bedeutet "zueinander versetzt" auch, dass z.B. vier Schienen eine klassische 4-Wegekreuzung analog zum Straßenverkehr realisieren? Beinhaltet "versetzt" auch z.B. "um 90° gedreht und versetzt"?

5. Gütertransportsystem (10) nach einem der Ansprüche 1 bis 4, **dadurch gekennzeichnet, dass** die Aktivkomponente (22) des Planarmotors (24) eine Polpaarweite aufweist, die einer Polpaarweite eines Linearmotors (25) oder einem ganzzahligen Vielfachen oder ganzzahligen Bruchteil der Polpaarweite des Linearmotors (25) entspricht.

6. Gütertransportsystem (10) nach einem der Ansprüche 1 bis 5, **dadurch gekennzeichnet, dass** der Werkstückträger (16) beabstandet zur Hauptebene des Umlenkmoduls (20) mit mechanischen Führungselementen (13) versehen ist.

7. Gütertransportsystem (10) nach einem der Ansprüche 1 bis 6, **dadurch gekennzeichnet, dass** der Linearmotor (25) der Zufuhrschiene (12) und/oder der Abfuhrschiene (14) eine Mehrzahl an parallel angeordneten Spulenreihen (28) umfasst, die unabhängig ansteuerbar sind.

8. Gütertransportsystem (10) nach einem der Ansprüche 1 bis 7, **dadurch gekennzeichnet, dass** in einem Bereich des Umlenkmoduls (20) zumindest ein Erfassungsmittel (26) zum Erfassen einer Position und/oder Ausrichtung des Werkstückträgers (16) vorgesehen ist.

9. Gütertransportsystem (10) nach einem der Ansprüche 1 bis 8, **dadurch gekennzeichnet, dass** am Umlenkmodul (20) zumindest drei Abfuhrschienen (14) angeordnet sind.

10. Gütertransportsystem (10) nach einem der Ansprüche 1 bis 9, **dadurch gekennzeichnet, dass** der Werkstückträger (16) bei einem Überqueren des Umlenkmoduls (20) vorgebbar kippbar ist.

11. Gütertransportsystem (10) nach einem der Ansprüche 1 bis 10, **dadurch gekennzeichnet, dass** der Werkstückträger (16) zumindest zwei Paare von Magnetpaketen (18) aufweist, die überkreuzend angeordnet sind.

12. Steuereinheit (30) zum Ausgeben von Steuerbefehlen (31) an zumindest eine Aktivkomponente (22) eines Planarmotors (24), die zum vorgebbaren Bewegen eines Werkstückträgers (16) eingerichtet ist, **dadurch gekennzeichnet, dass** die Steuereinheit (30) dazu eingerichtet ist, den Werkstückträger (16) von einer Zufuhrschiene (12) über die Aktivkomponente (22) gleitend zu einer Abfuhrschiene (14) zu bewegen.

13. Bausatz (45) zum Herstellen eines Gütertransportsystems (10), umfassend zumindest eine Zufuhrschiene (12), eine Mehrzahl an Abfuhrschienen (14) und zumindest ein Umlenkmodul (20), das als Aktivkomponente (22) eines Planarmotors (24) ausgebildet ist, **dadurch gekennzeichnet, dass** der Bausatz (45) zum Herstellen eines Gütertransportsystems (10) nach einem der Ansprüche 1 bis 11 eingerichtet ist.

14. Simulationsprogrammprodukt (50) zum Simulieren eines Betriebsverhaltens eines Gütertransportsystems (10), das ein digitales Abbild des Gütertransportsystems (10) aufweist, **dadurch gekennzeichnet, dass** das Gütertransportsystem (10) nach einem der Ansprüche 1 bis 11 ausgebildet ist.

15. Verwendung einer Aktivkomponente (22) eines Planarmotors (24) in einem Gütertransportsystem (10) mit Linearmotoren (25) als zumindest eine Zufuhrschiene (12) und zumindest eine Abfuhrschiene (14), **dadurch gekennzeichnet, dass** die Aktivkomponente (22) für Werkstückträger (16) als Weiche und/oder Kreuzung zwischen der Zufuhrschiene (12) und der Abfuhrschiene (14) eingesetzt wird.
